# EUROPEAN PATENT SPECIFICATION

(11) **EP 1 469 695 B1**
(45) Date of publication and mention of the grant of the patent: **01.03.2006**
(21) Application number: 03729494.9
(22) Date of filing: 17.01.2003
(51) Int. Cl.: H04Q 7/38

(54) **SYSTEM FOR DETECTING AND STORING MOBILE TERMINALS THAT ACCESS A FOREIGN TELEPHONE NETWORK**
"SYSTEM ZUM ERKENNEN UND SPEICHERN VON MOBILEN ENDGERÄTEN, DIE AUF EIN FREMDES FERNSPRECHNETZWERK ZUGREIFEN"
SYSTEME DE DETECTION ET DE STOCKAGE DE TERMINAUX MOBILES AYANT ACCES A UN RESEAU TELEPHONIQUE ETRANGER

(30) Priority: 21.01.2002 ES 200200120
(43) Date of publication of application: 20.10.2004
(73) Proprietor: Vodafone Group PLC, Newbury Berkshire RG14 2FN (GB)
(72) Inventor: SANCHEZ FERRERAS, Oscar Julián, E-28043 Madrid (ES); MARTIN LOPEZ, David, E-28027 Madrid (ES); BORRERO ORTIZ, Santiago, 28028 Madrid (ES)
(74) Representative: Carvajal y Urquijo, Isabel
(86) International application number: PCT/ES2003/000021
(87) International publication number: WO 2003/061320

(56) References cited:
- EP-A2- 0 702 497
- EP-A2- 1 150 530
- WO-A2-01/10109
- WO-A2-98/32303

## Description

### OBJECT OF THE INVENTION

As expressed in the title of this specification, the present invention consists of a detection and storage system of mobile terminals accessing a foreign telephone network, and whose object is to permit providing specific services to those subscribers who are outside of their network, therefore each time a mobile terminal is registered in a foreign network, the terminal data are stored in a data base of the subscriber's mobile telephone network, such that it is known what subscribers are in a foreign network, in order to provide them with specific services in said foreign network.

### BACKGROUND OF THE INVENTION

Currently, many mobile network subscribers travel from one country to another, causing the terminal to change to one of the networks of the country the subscriber is in. To avoid this drawback, Roaming (international mobile connection) technology has been developed by means of which a mobile network can detect subscribers located in other networks, such that the mobile terminal subscriber is permitted to use the terminal in a mobile network that is outside of coverage of the network to which the subscriber belongs, being able to thus make and receive calls or send and receive short messages. To do so, different mobile telephone networks from different countries are interconnected by means of gateways through which communication with the mobile terminal accessing a foreign network is permitted, therefore the gateway, among other signalings, indicates when a subscriber enters/exits a foreign network, the foreign network data and the data referring to the mobile terminal, all this to activate an indication in the mobile terminal network that said mobile terminal is in a foreign network.

In this sense, it is worth mentioning that there is a Roaming Out technology which is the case in which a mobile terminal is in a foreign network and wants to connect to its own. This same case seen from the foreign network is Roaming In, since in this case a foreign terminal accesses the network to communicate with a foreign network.

Currently, to provide different specific services to those subscribers who are outside of their network, services such as adapting the subscriber profile (subscriber contracted services) to the features of the network which the subscriber is in for optimizing services the subscriber has contracted with his/her network, has the drawback that it is necessary to know which terminals are outside of their own network and when the entrance and exit of these terminals in their network occurs in order to know which subscriber should be offered these services.

WO-A-01/10109 discloses a method of controlling charging for a subscriber of a home network when the subscriber is roaming in a foreign network.

WO-A-98/32303 relates to a cellular packet radio network and to a method for updating a routing area in a packet radio network, that is, for supporting mobility in packet radio networks.

EP-0702497-A2 discloses a method and system for updating a replicated database in a foreign telecommunication network system situated in a foreign region and a home country telecommunication network system situated in a home country. The method and system improves call setup time and system availability in a foreign region for customers roaming outside their home country.

EP-1150530-A2 refers to a mobile network system and a method the service control information changing method in which by transmitting a registration request message containing change information of service content from the mobile terminal equipment to a foreign agent apparatus, the service control information concerning the mobile terminal equipment that is possessed by each of the foreign agent apparatus, a foreign server apparatus, a home server apparatus, a home agent apparatus, and a correspondent node is updated.

### DESCRIPTION OF THE INVENTION

The invention relates to a system for detecting the access of one or more mobile subscribers, belonging to a home network for mobile telephony, to a foreign network for mobile telephony, and for storing information indicative thereof according to claim 1. Preferred embodiments of the invention are defined in the dependent claims.

To know which subscribers should be provided with the specific services when located outside of their network, the invention has developed a new system in which, between the gateway and the mobile terminal network, processing means have been provided which detect, out of all the information circulating through the gateway, the entrance/exit signaling parameters of a terminal in a foreign network, the foreign network data and the data referring to the terminal, such that these data are separated from the remaining data and are sent to analysis means which, after analyzing the information, access storage means which store the terminals which enter/exit a foreign network, the foreign network data and the data of the terminals in a foreign network, to know which terminals and which network each terminal is in, and to thus be able to provide the contracted services in the foreign network.

The analysis means are preferably connected to a real time service module which is informed every time an entrance/exit of a terminal in a foreign network is detected, for immediately providing services to the terminals in a foreign network, such that the real time services act in the moment when the subscriber changes network (enters in a foreign network or returns to its own network), all this such that it is not necessary to consult the data base, thus preventing making prior consultations for providing real time services, which significantly simplifies this functionality.

This structure prevents the different systems which provide real time services from consulting tables and only becoming operative when information of the subscriber entering/exiting the network which he/she is in at that time reaches the system of the invention.

With this solution, the location analyzer also acts when the terminal returns to its network, since, if it corresponds to a change to another foreign network, this has already been notified with the new network location update.

The invention foresees that when the analysis means detect the entrance of a terminal into a foreign network, then they consider that the subscriber has entered into said foreign network, storing this information in the data base such that the current subscriber location is updated, and at the same time communicate this to the real time service module so that it may act accordingly.

On the contrary, when the analysis means detect the exit of a terminal from a foreign network, then they verify whether they have received notification that the terminal has entered into another foreign network, and in the affirmative case, they consider the subscriber to have entered into said foreign network, storing this information and updating the current subscriber location in the data base, and at the same time communicate this to the real time service module, which acts accordingly; whereas if the verification is negative, then they consult their own network to verify whether the terminal has entered into their network again, and if an affirmative response is obtained, they eliminate the corresponding entry in the data base and report this to the real time service module.

The system of the invention may also comprise an event-based service module which is connected to an event generator so that when the latter generates a service for subscribers, the event-based service module accesses the data base to know which subscribers are located in foreign networks and to thus be able to provide them with the service.

In either case, to permit the described functionality, it is necessary to store in the data base the data referring to the features of each foreign network so as to be able to determine which network the different data received belong to and to adjust the subscriber contracted services to the features of the foreign network, such that the contracted services are optimized according to the features of the foreign network in which the mobile terminal is in.

Furthermore, the data base preferably stores the log of all visits made by each terminal to foreign networks to permit consultation thereof by other systems for carrying out statistics, etc. The system may comprise the possibility of cleaning the data stored in the log to periodically eliminate all unnecessary information.

To help to better understand this specification and forming an integral part thereof, a single drawing is attached below which, with an illustrative and non-limiting character, shows the object of the invention.

### BRIEF DESCRIPTION OF THE DRAWING

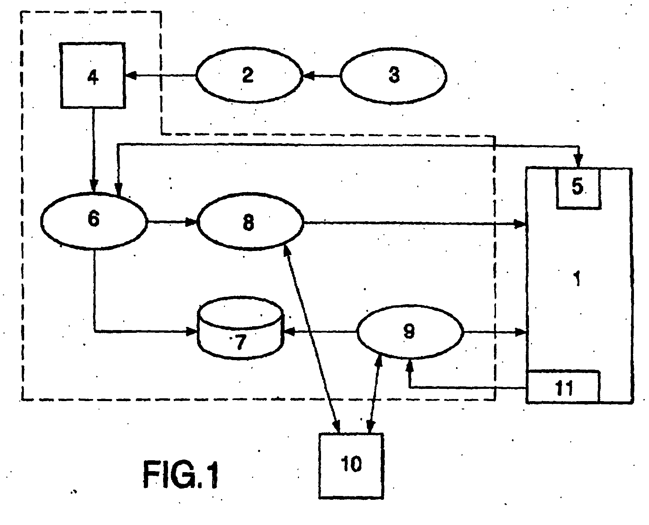

Figure 1 shows a functional block diagram of a possible embodiment example of the system of the invention.

### DESCRIPTION OF THE PREFERRED EMBODIMENT

A description of the invention is made below based on the aforementioned figure.

Currently, many mobile network subscribers travel from one country to another, which causes the subscriber to change to one of the networks of the country he/she is in. To prevent this, Roaming technology was developed with which a mobile network can detect mobile terminals in other networks, such that a mobile terminal subscriber is permitted to use the terminal in a mobile network outside of the coverage of the network to which he/she belongs, thus being able to make and receive calls or to send and receive short messages (SMS) from a network other than the one to which it belongs.

By means of the Roaming (international mobile connection) service, it is possible to provide specific services to those subscribers who are outside of their network, but the drawback is based on knowing which subscribers should be provided with these services, it is therefore necessary to know which mobile terminals are outside of their network, as well as to know when the terminals enter and-exit their own network.

To do so, the invention has developed a system which permits knowing all these data in real time.

As is well known, a mobile telephone network 1 is connected to the different foreign mobile telephone networks 3 by means of gateways 2 for exchanging information between the HLR (Home Location Register) of the network 1 and the VLR (Visitor Location Register) of the foreign network.

This exchange of information is carried out by means of a protocol called MAP (Mobile Application Protocol) and different information is exchanged between them, among which the following parameters are worth mentioning: Update Location, Insert Subscriber and Cancel Location. The Update Location parameter is generated every time there is a change of mobile terminal location, and by means of this signaling, the location in which the subscriber is registered is updated in the subscriber profile in the HLR.

The subscriber profile not only contains the subscriber location, as mentioned, but rather it also includes the services the subscriber has contracted, such as news services, if fixing of rates is carried out by means of contract or pre-payment, if Roaming is active, etc. These subscriber data are located in the Insert Subscriber information, which come to form part of the visited VLR through the sending of an Insert Subscriber for the VLR to know what are this subscriber's features.

With regard to the Cancel Location information, it is worth mentioning that it is generated in the HLR and sent to the VLR so as to indicate that the subscriber has left the domain of this VLR, since an Update Location has been sent from another VLR to the HLR, and the subscriber information that was sent to it must be eliminated.

Therefore, signaling is exchanged between the HLR and the VLR of the different mobile telephone networks, by means of which signaling it is indicated when a subscriber enters/exits a foreign network, as well as the data referring to the mobile terminal which has accessed a foreign network, and the foreign network data are also sent, such that by using this information, a system can be created which is capable of knowing which terminals are outside of their own network.

For this, the system of the invention comprises a processor 4 connected between the connection gateway 2 of the foreign network 3 with the network 1, such that all the information passing through the gateway, passes through the processor 4 which continuously reads the information exchanged between the international gateways 2 and a HLR 5 of the mobile terminal's own network 1, such that it selects only the aforementioned MAP protocol parameters, i.e., it carries out filter functions by detecting said information. The processor 4 is connected to a location analyzer 6 which collects the information sent via HTTP (Hyper Text Transfer Protocol) and stores this information in a data base 7 while analyzing it in order to detect the detected location changes and to report said changes to a real time service module 8, such that the latter knows each entrance/exit of a terminal in a foreign network, such that these terminals can be immediately provided with services to the terminals in a foreign network without having to make prior consultations.

Furthermore, the data base 7 is connected to an event-based service module 9 which is connected to an event generator 11, so that when the latter generates a subscriber service, the event-based service module accesses the data base so as to know which subscribers are located in foreign networks, and to thus provide the service to them.

An example of an event-based service can be subscription services, such as news while abroad. This service is carried out every certain time by means of the event generator 11 so that the module 9 consults the data base 7 to see which of those subscribers who have contracted the service are abroad, and to thus be able to send them the news.

Modules 8 and 9 can be accessed by other systems 10 for providing real time services by means of systems outside of the network itself, or by the subscriber's network 1.

When the analyzer 6 receives notification corresponding to the exit of a mobile terminal from a network and has not received notification of the entrance into another network, it consults the HLR to know in which VLR the subscriber is registered in order to check whether he/she has already returned to his/her network, since, if the subscriber has returned to his/her own network, there is no exchange of information between the VLR of the outside networks and its own HLR, there being no dialogue that the information processor 4 can pick up. Therefore, the analyzer 6 must consult the HLR 5 of its own network to see if the subscriber is in a VLR of the network, and to thus confirm the presence of the subscriber in the network, since there is no exchange of information through the gateway 2.

Therefore, apart from storing the information received from the processor, the analyzer 6 also stores, in the data base 7, the information it obtains from the consultations made to the HLR 5.

It is necessary to indicate that the information processor only reports location updates (Update Location) corresponding to an entrance into a foreign network 3, disregarding those corresponding to VLRs of the same network as the previous ones, since they correspond to movements within the foreign network 3 itself. In the same manner, it only reports location cancellations (Cancel Location) corresponding to an exit from the foreign network, disregarding those corresponding to the VLRs of the same network as the new VLR where it is located, since they correspond to movements within the same network:

Therefore, when the location analyzer receives an Update Location message, it considers that the subscriber has entered into a new foreign network 3 and proceeds as follows:
1.- It stores this information in the data base 7, updating the entry corresponding to the current subscriber location.
2.- It notifies the real time service module 8 that a new entry has occurred.

In the same manner, when the location analyzer 6 receives a Cancel Location message, it considers the subscriber to have left the foreign network 3 in which the subscriber was in up to that time. In this case, two different situations occur:
A) It can happen that a location cancellation notification had been received when a network location update notification was received, in which case it is considered that the subscriber has left the network in which he/she was in up to that time and has entered into another new foreign network.
B) If a location cancellation notification has been received but a location update notification in another foreign network has not been received, it is considered that the mobile terminal has left the network it was in up to that time and has again entered into its own network 1. To confirm whether the subscriber has entered in his/her network, a consultation is made in the HLR 5 to detect in which VLR the subscriber is in. This checking is necessary since the processor 4, as was already described, does not pick up the VLR location update messages of the subscriber's own network 1, since it only checks the international links by means of the information passing through the international gateways 2.

In case B, the location analyzer 6 only acts when the client returns to the network since, if it corresponds to a change to another foreign network, the analyzer has already been notified with the location update in the new network. If it is verified that the subscriber has returned to his/her network, it proceeds in the following manner:
- The corresponding data base entry is eliminated.
- The real time service module 8 is informed of this return.

It is also worth mentioning that the data base incorporates a log table containing the networks visited by each client, therefore in the previous case, this log table is also updated.

Likewise, said log table is updated with each network change, such that by accessing this table, statistics can be carried out and any type of data of interest for systems outside of the subscriber's network 1 or for said network 1 can be obtained.

The MSISDN (Mobile Station International ISDN Number, which corresponds to the mobile telephone number) is stored in this table log, as well as the country code of the network in which it is located, the network operator identifier in which it is located, the Camel version supported by the network, the IN (Intelligent Network) service identifier, if there is or is not an agreement with the foreign network, and the location update date.

Also stored in the data base 7 is all the information necessary for identifying the foreign network VLRs, i.e., all the information necessary for knowing which network each VLR (operator table) belongs to.

This table stores the country code, the operator identifier, the numbering range identifying each VLR, the supported version for carrying out real time added services (the intelligent network Camel environment focused on mobile subscribers), and in case of not supporting a Camel version, this parameter will be blank, and it also stores whether there is or not an agreement with said foreign network.

Therefore, by means of this stored information, the VLR country code can be determined from the VLR number which comprises the country code plus the range, plus the remaining numbering. An example could be 39 348 4228995, which is received in the notifications of the information processor from which, consulting the data base, the VLR country code is obtained which, in the indicated example, is 39 and corresponds to Italy, as well as the identifier of the network to which it belongs, which in the case of the example is 348 and corresponds to Omnitel®. In this manner, the system of the invention knows which foreign network a subscriber is registered in.

With regard to the update table of each subscriber's location, this contains the MSISDN, the country code, the operator identifier, the Camel version supported by the network, the IN service identifier if there is an agreement with the network, if it is pre-payment or not, and the date of the last location update.

The information sent by the location analyzer 6 to the real time service module 8 comprises the MSISDN, the country code of the network, the operator identifier, the Camel version supported by the network, and the IN service identifier.

When the location analyzer 6 receives notification of a location change, it acts on the data base 7 in the following manner.
- It consults the operator table to obtain the necessary information regarding the VLR.
- If it exists, it copies the entry that the subscriber has in the location update table in the log table.
- It updates the subscriber data in the location update table.
- If the subscriber does not have an entry in this table since he/she is located in his/her network up to that time, but has entered a foreign network, it creates an entry.
- If the subscriber has an entry, since he/she is in a foreign network, but has entered another foreign network, it updates the entry.
- If the subscriber returns to his/her network, his/her entry will be eliminated.

## Claims

1. A system for detecting the access of one or more mobile subscribers, belonging to a home network (1) for mobile telephony, to a foreign network (3) for mobile telephony, and for storing information indicative thereof, the foreign network being one of a plurality of foreign networks for mobile telephony connected to the home network (1) through a gateway (2), said gateway being arranged to provide communication with the mobile subscriber accessing the respective foreign network (3) and to provide for the transmission between the foreign network (3) and the home network (1), of signaling parameters including an indication of a mobile subscriber entering/exiting the foreign network (3), as well as data regarding the foreign network (3) and data regarding the mobile subscriber, the home network (1) being arranged to activate an indication that said mobile subscriber is in the foreign network in response to said signaling parameters;
**characterized in that** the system comprises
processing means (4), connected between the gateway (2) and the home network (1), said processing means (4) being arranged to detect, on the basis of information circulating through the gateway (2), the signaling parameters including the indication of entrance/exit of the one or more mobile subscribers in/from the respective foreign network, the data regarding the foreign network and the data regarding the mobile subscriber, the processing means further being arranged to separate and send these data to analysis means (6) provided in the system for analyzing the data and for subsequently accessing storage means (7) provided in the system, said storage means (7) being arranged to store data identifying the mobile subscriber entering/exiting a foreign network, the data regarding the foreign network and the data regarding the mobile subscriber in the foreign network, these parameters providing the system with information on which mobile subscribers are visiting a foreign network and which foreign network each mobile subscriber is in, the system being arranged to provide contracted services to the mobile subscriber in the foreign network, using said information.

2. A system according to claim 1, wherein the analysis means (6) are connected to a real time service module (8), the analysis means being arranged to inform said real time service module (8) in response to the detection by said analysis means of an entrance/exit of a subscriber in a foreign network, the real time service module (8) being capable of immediately and directly providing real time services to the subscribers in a foreign network.

3. A system according to any of claims 1 and 2, wherein the system further comprises an event-based service module (9) connected to an event generator (11) which is arranged to generate a service for subscribers located in foreign networks, in response to which the event-based service module (9) is arranged to access the storage means (7) and obtain the information on which subscribers are located in a foreign networks (3), in order to provide the service to said subscribers.

4. A system according to claim 1, wherein the storage means (7) are arranged to contain data regarding features of each foreign network (3), in order to make it possible for the system to determine which network different received data belong to, and to adapt the contracted services to the features of the foreign network in which the subscriber is located.

5. A system according to claim 2, wherein the analysis means (6) are arranged to detect an entrance of a subscriber into a foreign network, in response to which said analysis means consider that the subscriber has entered into a foreign network, and are arranged to store this information in the storage means (7), and update the current subscriber location and communicate this to the real time service module (8).

6. A system according to claim 2, wherein the analysis means (6) are arranged to detect an exit of a subscriber from a foreign network (3), in response to which the analysis means (6) are arranged to verify whether notification has been received that the subscriber has entered into another foreign network (3), the analysis means further being arranged so that:
if the result of the verification is affirmative, the analysis means are arranged to consider that the subscriber has entered into another foreign network, and to store this information and to update the current subscriber location in the storage means (7), and communicate this to the real time service module (8); whereas
if the result of the verification is negative, the analysis means are arranged to consult the home network (1) to verify whether the subscriber has again entered the home network, and if an affirmative response is obtained, the analysis means are arranged to eliminate the corresponding entry in the storage means (7) and report this to the real time service module.

7. A system according to any one of the previous claims, wherein the storage means (7) are arranged to store a log of all the visits made by each subscriber to the foreign network such that consultation thereof by other systems is permitted.

## Revendications

1. Système de détection d'accès d'un ou plusieurs abonnés mobiles, appartenant à un réseau de rattachement (1) pour la téléphonie mobile, à un réseau étranger (3) de téléphonie mobile, et de mémorisation d'informations indicatives de celui-ci, le réseau étranger étant un réseau d'une pluralité de réseaux étrangers de téléphonie mobile reliés au réseau de rattachement (1) par l'intermédiaire d'une passerelle (2), ladite passerelle étant agencée pour permettre une communication avec l'abonné mobile accédant au réseau étranger respectif (3) et pour permettre la transmission, entre le réseau étranger (3) et le réseau de rattachement (1), de paramètres de signalisation comprenant une indication d'un abonné mobile entrant/sortant du réseau étranger (3), de même que des données concernant le réseau étranger (3) et des données concernant l'abonné mobile, le réseau de rattachement (1) étant agencé pour activer une indication de ce que ledit abonné mobile est dans le réseau étranger, en réponse auxdits paramètres de signalisation,
**caractérisé en ce que** le système comprend :
un moyen de traitement (4), branché entre la passerelle (2) et le réseau de rattachement (1), ledit moyen de traitement (4) étant agencé pour détecter, d'après des informations circulant par l'intermédiaire de la passerelle (2), les paramètres de signalisation comprenant l'indication de l'entrée/sortie du dit un ou plusieurs abonnés mobiles dans/depuis le réseau étranger respectif, les données concernant le réseau étranger et les données concernant l'abonné mobile, le moyen de traitement étant en outre agencé pour séparer et envoyer ces données à un moyen d'analyse (6) prévu dans le système pour analyser les données et pour accéder ensuite à un moyen de mémorisation (7) prévu dans le système, ledit moyen de mémorisation (7) étant agencé pour mémoriser des données identifiant l'abonné mobile entrant dans un réseau/sortant d'un réseau étranger, les données concernant le réseau étranger et les données concernant l'abonné mobile dans le réseau étranger, ces paramètres procurant au système des informations sur les abonnés mobiles qui sont en train de visiter un réseau étranger et le réseau étranger dans lequel se trouve chaque abonné mobile, le système étant agencé pour fournir des services contractuels à l'abonné mobile dans le réseau étranger, en utilisant lesdites informations.

2. Système selon la revendication 1, dans lequel le moyen d'analyse (6) est relié à un module de service en temps réel (8), le moyen d'analyse étant agencé pour informer ledit module de service en temps réel (8) en réponse à la détection par ledit moyen d'analyse d'une entrée/sortie d'un abonné dans un réseau étranger, le module de service en temps réel (8) pouvant fournir immédiatement et directement des services en temps réel aux abonnés dans un réseau étranger.

3. Système selon l'une quelconque des revendications 1 et 2, dans lequel le système comprend en outre un module de service à base d'événement (9) relié à un générateur d'événement (11) qui est agencé pour engendrer un service pour des abonnés situés dans des réseaux étrangers, en réponse auquel le module de service à base d'événement (9) est agencé pour accéder au moyen de mémorisation (7) et obtenir les informations sur les abonnés qui sont situés dans des réseaux étrangers (3) de manière à fournir le service auxdits abonnés.

4. Système selon la revendication 1, dans lequel le moyen de mémorisation (7) est agencé pour contenir des données concernant les caractéristiques de chaque réseau étranger (3) de manière à permettre que le système détermine à quel réseau différent appartiennent des données reçues, et pour adapter les services contractuels aux caractéristiques du réseau étranger dans lequel l'abonné est situé.

5. Système selon la revendication 2, dans lequel le moyen d'analyse (6) est agencé pour détecter une entrée d'un abonné dans un réseau étranger, en réponse à quoi, ledit moyen d'analyse considère que l'abonné est entré dans un réseau étranger, et est agencé pour mémoriser ces informations dans le moyen de mémorisation (7), et mettre à jour la position courante de l'abonné et communiquer cela au module de service en temps réel (8).

6. Système selon la revendication 2, dans lequel le moyen d'analyse (6) est agencé pour détecter une sortie d'un abonné hors d'un réseau étranger (3), en réponse à quoi le moyen d'analyse (6) est agencé pour vérifier si une notification a été reçue indiquant que l'abonné est entré dans un autre réseau étranger (3), le moyen d'analyse étant en outre agencé de manière à ce que :
si le résultat de la vérification est affirmatif, le moyen d'analyse est agencé pour considérer que l'abonné est entré dans un autre réseau étranger, et pour mémoriser ces informations et pour mettre à jour la position courante de l'abonné dans le moyen de mémorisation (7), et communiquer ces informations au module de service en temps réel (8), alors que
si le résultat de la vérification est négatif, le moyen d'analyse est agencé pour consulter le réseau de rattachement (1) pour vérifier si l'abonné est à nouveau entré dans le réseau de rattachement, et, si une réponse affirmative est obtenue, le moyen d'analyse est agencé pour éliminer l'écriture correspondante dans le moyen de mémorisation (7) et signaler cela au module de service en temps réel.

7. Système selon l'une quelconque des revendications précédentes, dans lequel le moyen de mémorisation (7) est agencé pour mémoriser un journal de toutes les visites faites par chaque abonné au réseau étranger de sorte qu'une consultation de celle-ci par d'autres systèmes peut intervenir.

## Patentansprüche

1. System zum Ermitteln des Zugriffs von einem oder mehreren Mobilfunkteilnehmern, die zu einem Heimatnetz (1) für Mobiltelefonie gehören, auf ein Fremdnetz (3) für Mobiltelefonie, und zum Speichem von dies aufzeigenden Informationen, wobei das Fremdnetz eines von mehreren über einen Netzübergang (2) mit dem Heimatnetz (1) verbundenen Fremdnetzen für Mobiltelefonie ist, wobei der Netzübergang eingerichtet ist, um eine Verbindung mit dem Mobilfunkteilnehmer, der auf das entsprechende Fremdnetz (3) zugreift, bereitzustellen und, um für die Übertragung von Zeichengabeparametem, die eine Anzeige von einem Mobilfunkteilnehmer, der in das/aus dem Fremdnetz (3) eintritt/austritt, sowie Daten, die das Fremdnetz (3) betreffen, und Daten, die den Mobilfunkteilnehmer betreffen, umfassen, zwischen dem Fremdnetz (3) und dem Heimatnetz (1) zu sorgen, wobei das Heimatnetz (1) eingerichtet ist, um als Reaktion auf die Zeichengabeparameter eine Anzeige, dass der Mobilfunkteilnehmer im Fremdnetz ist, zu aktivieren;
**dadurch gekennzeichnet, dass** das System
Verarbeitungsmittel (4), die zwischen dem Netzübergang (2) und dem Heimatnetz (1) verbunden sind, umfasst, wobei die Verarbeitungsmittel (4) eingerichtet sind, um basierend auf Informationen, die über den Netzübergang (2) zirkulieren, die Zeichengabeparameter zu ermitteln, die die Anzeige des Eintritts/Austritts von dem einen oder den mehreren Mobilfunkteilnehmern in das entsprechende/aus dem entsprechenden Fremdnetz, die Daten, die das Fremdnetz betreffen, und die Daten, die den Mobilfunkteilnehmer betreffen, umfassen, wobei die Verarbeitungsmittel femer eingerichtet sind, um diese Daten zu trennen und an Analysemittel (6) zu senden, die in dem System zum Analysieren der Daten und zum anschließenden Zugreifen auf im System bereitgestellte Speichermittel (7) bereitgestellt werden, wobei die Speichermittel (7) eingerichtet sind, um Daten, die den Mobilfunkteilnehmer, der in das/aus dem Fremdnetz eintritt/austritt, identifizieren, die Daten, die das Fremdnetz betreffen, und die Daten, die den Mobilfunkteilnehmer im Fremdnetz betreffen, zu speichern, wobei diese Parameter das System mit Informationen darüber versehen, welche Mobilfunkteilnehmer ein Fremdnetz besuchen und in welchem Fremdnetz jeder Mobilfunkteilnehmer ist, wobei das System eingerichtet ist, um unter Verwendung der Informationen vertraglich vereinbarte Dienste für den Mobilfunkteilnehmer im Fremdnetz bereitzustellen.

2. System nach Anspruch 1, wobei die Analysemittel (6) mit einem Echtzeit-Dienstmodul (8) verbunden sind, wobei die Analysemittel eingerichtet sind, um das Echtzeit-Dienstmodul (8) als Reaktion auf das Ermitteln eines Eintritts/Austritts eines Teilnehmers in ein/aus einem Fremdnetz durch die Analysemittel zu informieren, wobei das Echtzeit-Dienstmodul (8) imstande ist, unverzüglich und direkt Echtzeitdienste für die Teilnehmer in einem Fremdnetz bereitzustellen.

3. System nach einem der Ansprüche 1 und 2, wobei das System femer ein ereignisbasiertes Dienstmodul (9) umfasst, das mit einem Ereignisgenerator (11) verbunden ist, der eingerichtet ist, um einen Dienst für Teilnehmer, die sich in Fremdnetzen befinden, zu erzeugen, wobei das ereignisbasierte Dienstmodul (9) eingerichtet ist, um als Reaktion darauf auf die Speichermittel (7) zuzugreifen und die Informationen darüber, welche Teilnehmer sich in Fremdnetzen (3) befinden, zu erhalten, um den Dienst für die Teilnehmer bereitzustellen.

4. System nach Anspruch 1, wobei die Speichermittel (7) eingerichtet sind, um Daten zu enthalten, die Merkmale von jedem Fremdnetz (3) betreffen, um es dem System zu ermöglichen, zu bestimmen, zu welchem Netz unterschiedliche empfangene Daten gehören, und die vertraglich vereinbarten Dienste an die Merkmale des Fremdnetzes, in dem der Teilnehmer sich befindet, anzupassen.

5. System nach Anspruch 2, wobei die Analysemittel (6) eingerichtet sind, um einen Eintritt eines Teilnehmers in ein Fremdnetz zu ermitteln, wobei die Analysemittel als Reaktion darauf berücksichtigen, dass der Teilnehmer in ein Fremdnetz eingetreten ist, und eingerichtet sind, um diese Informationen in den Speichermitteln (7) zu speichern und die gegenwärtige Teilnehmerposition zu aktualisieren und diese an das Echtzeit-Dienstmodul (8) zu kommunizieren.

6. System nach Anspruch 2, wobei die Analysemittel (6) eingerichtet sind, um einen Austritt eines Teilnehmers aus einem Fremdnetz (3) zu ermitteln, wobei die Analysemittel (6) eingerichtet sind, um als Reaktion darauf zu prüfen, ob eine Benachrichtigung darüber, dass der Teilnehmer in ein anderes Fremdnetz (3) eingetreten ist, empfangen wurde, wobei die Analysemittel femer derart eingerichtet sind, dass:
wenn die Prüfung ergibt, dass dies zutrifft, die Analysemittel eingerichtet sind, um zu berücksichtigen, dass der Teilnehmer in ein anderes Fremdnetz eingetreten ist, und um diese Informationen zu speichern und die gegenwärtige Teilnehmerposition in den Speichermitteln (7) zu aktualisieren und dies an das Echtzeit-Dienstmodul (8) zu kommunizieren; wohingegen
wenn die Prüfung ergibt, dass dies nicht zutrifft, die Analysemittel eingerichtet sind, um das Heimatnetz (1) zu konsultieren, um zu prüfen, ob der Teilnehmer wieder in das Heimatnetz eingetreten ist, und, wenn als Antwort erhalten wird, dass dies zutrifft, die Analysemittel eingerichtet sind, um den entsprechenden Eintrag in den Speichermitteln (7) zu löschen und dies dem Echtzeit-Dienstmodul zu melden.

7. System nach einem der vorhergehenden Ansprüche, wobei die Speichermittel (7) eingerichtet sind, um ein Protokoll von allen Besuchen, die durch jeden Teilnehmer im Fremdnetz gemacht wurden, zu speichern, derart, dass die Konsultation davon durch andere Systeme erlaubt wird.
